# EUROPÄISCHE PATENTANMELDUNG

(11) **EP 2 927 438 A1**
(43) Veröffentlichungstag der Anmeldung: **07.10.2015**
(21) Anmeldenummer: 15000634.4
(22) Anmeldetag: 05.03.2015
(51) Int. Cl.: F01K 13/02, F01K 23/06, F01K 23/10, F01K 25/08, F22B 1/18

(54) **SYSTEM FÜR EINEN THERMODYNAMISCHEN KREISPROZESS, STEUEREINRICHTUNG FÜR EIN SYSTEM FÜR EINEN THERMODYNAMISCHE KREISPROZESS, VERFAHREN ZUM BETREIBEN EINES SYSTEMS, UND ANORDNUNG MIT EINER BRENNKRAFTMASCHINE UND EINEM SYSTEM**

(30) Priorität: 31.03.2014 DE 102014206038
(71) Anmelder: MTU FRIEDRICHSHAFEN GMBH, 88045 Friedrichshafen (DE)
(72) Erfinder: Fast, Gerald, 88677 Markdorf (DE); Horbach, Tim, 88048 Friedrichshafen (DE); Lorenz, Max, 88048 Friedrichshafen (DE); Niemeyer, Jens, 88045 Friedrichshafen (DE)
(74) Vertreter: RRPS European Patent Attorneys

(57) **Zusammenfassung**

Die Erfindung betrifft ein System (5) für einen thermodynamischen Kreisprozess, mit einem Kreislauf (9) für ein Arbeitsmedium, wobei eine Medienmengenvariationseinrichtung (19) vorgesehen ist, die mit dem Kreislauf (9) derart verbunden und so ausgebildet ist, dass eine in dem Kreislauf (9) vorhandene Menge an Arbeitsmedium mittels der Medienmengenvariationseinrichtung (19) im Betrieb des Systems (5) veränderbar ist.

## Beschreibung

Die Erfindung betrifft ein System für einen thermodynamischen Kreisprozess gemäß Anspruch 1, eine Steuereinrichtung für ein System für einen thermodynamischen Kreisprozess gemäß Anspruch 12, ein Verfahren zum Betreiben eines solchen Systems gemäß Anspruch 13 und eine Anordnung mit einer Brennkraftmaschine und einem solchen System gemäß Anspruch 14.

Systeme der hier angesprochenen Art sind grundsätzlich bekannt. Sie weisen einen Kreislauf für ein Arbeitsmedium auf, der typischerweise als geschlossener Systemkreislauf mit einmalig festgelegter Füllmenge ausgestaltet ist. Insbesondere Systeme, die ausgelegt für einen organischen Rankine-Kreisprozess, welcher dem Clausius-Rankine-Kreisprozess ähnlich ist, jedoch mit einem organischen Arbeitsmedium bei niedrigeren Arbeitstemperaturen durchgeführt wird, wodurch er sich insbesondere zur Abwärmenutzung eignet, weisen festgelegte Füllmengen auf, in denen eine Sicherheitsreserve berücksichtig ist. Es ist daher mehr Arbeitsmedium in dem Kreislauf des Systems, als eigentlich nötig wäre. Dies führt zu einer reduzierten Leistungsausbeute des Systems und zu Einschränkungen im transienten Betrieb.

Der Erfindung liegt daher die Aufgabe zugrunde, ein System zu schaffen, welches die genannten Nachteile nicht aufweist. Die Erfindung liegt außerdem die Aufgabe zugrunde, eine Steuereinrichtung für ein solches System, ein Verfahren zum Betreiben eines solchen Systems und eine Anordnung mit einer Brennkraftmaschine und einem solchen System zu schaffen, wobei ebenfalls die genannten Nachteile nicht auftreten.

Die Aufgabe wird gelöst, indem ein System mit den Merkmalen des Anspruchs 1 geschaffen wird. Dieses zeichnet sich durch eine Medienmengenvariationseinrichtung aus, die mit dem Kreislauf des Systems derart verbunden und so ausgebildet ist, dass eine in dem Kreislauf vorhandene Menge an Arbeitsmedium mittels der Medienmengenvariationseinrichtung im Betrieb des Systems veränderbar ist. Das System weist also keine einmalig festgelegte Füllmenge auf, sondern die Füllmenge des Systems ist mithilfe der Medienmengenvariationseinrichtung während des Betriebs des Systems variierbar. Sie kann insbesondere dynamisch während des Betriebs eingestellt werden, sodass sie stets unter Gewährleistung eines stabilen Betriebes soweit wie möglich reduziert werden kann. Hierdurch kann die Leistungsausbeute des Systems, insbesondere in einem Auslegungspunkt und in Teillast, gesteigert werden. Es resultiert auch eine verbesserte Regelbarkeit des Systems. Mithilfe der Medienmengenvariationseinrichtung ist auch ein Ausgleich von Leckageverlusten bei einer Alterung des Systems möglich.

Es hat sich insbesondere herausgestellt, dass die Füllmenge eines Kreislaufs für einen thermodynamischen Kreisprozess, insbesondere für einen organischen Rankine-Kreisprozess - kurz ORC-Prozess genannt - als wesentlicher Parameter ein Druckniveau in einem Kondensator des Kreislaufs bestimmt. Hierdurch wird wiederum die Leistungsausbeute des Prozesses bestimmt. Für einen leistungsoptimalen Betrieb muss die Füllmenge so gering wie möglich sein, wobei sie jedoch nach unten durch eine Stabilität der Prozessführung begrenzt ist. Beispielsweise kann es bei einer zu geringen Füllmenge zu Kavitationen in einer Fördereinrichtung für das Arbeitsmedium entlang des Kreislaufs kommen. Es hat sich auch herausgestellt, dass die optimale Füllmenge für den Kreislauf vom Betriebspunkt des Systems abhängt beziehungsweise mit dem Betriebspunkt des Systems variiert. Diese Einschränkungen haben es bisher nötig gemacht, in geschlossenen Systemkreisläufen mit einmalig festgelegter Füllmenge eine Sicherheitsreserve vorzuhalten, die in jedem Betriebspunkt einen stabilen Betrieb gewährleistet. Dabei wurden Einbußen in der Leistungsausbeute in Kauf genommen. Dies ist nun nicht mehr nötig, da die Füllmenge bei dem hier vorgeschlagenen System mithilfe der Medienmengenvariationseinrichtung im Betrieb verändert werden kann.

Es wird ein Ausführungsbeispiel des Systems bevorzugt, das sich dadurch auszeichnet, dass die Medienmengenvariationseinrichtung ein Reservoir für das Arbeitsmedium aufweist, welches mit dem Kreislauf in Fluidverbindung ist. Hierdurch ist in konstruktiv und auch im Übrigen technisch sehr einfacher Weise die an dem Kreislauf teilnehmende Menge des Arbeitsmediums durch Kommunikation mit dem Reservoir veränderbar, indem entweder Arbeitsmedium aus dem Reservoir entnommen und dem Kreislauf zugeführt, oder aus dem Kreislauf entnommen und dem Reservoir zugeführt wird. Es ist also ohne weiteres möglich, die Füllmenge im Kreislauf durch Speisung aus dem Reservoir zu erhöhen, oder sie durch Abführen von Arbeitsmedium aus dem Kreislauf in das Reservoir zu erniedrigen.

Es wird auch ein Ausführungsbeispiel des Systems bevorzugt, dass sich dadurch auszeichnet, dass das Reservoir eine Volumenveränderungseinrichtung aufweist, die eingerichtet ist zur Veränderung eines Füllvolumens für das Arbeitsmedium in dem Reservoir. Mithilfe der Volumenveränderungseinrichtung ist also ein dem Arbeitsmedium in dem Reservoir zur Verfügung stehendes Volumen veränderbar. Dadurch kann Arbeitsmedium entweder aus dem Füllvolumen des Reservoirs durch Verkleinerung desselben verdrängt oder umgekehrt durch Vergrößerung des Füllvolumens aus dem Kreislauf in das Reservoir abgezogen werden. In diesem Fall ist das Reservoir vorzugsweise als geschlossener Behälter - ohne Fluidverbindung zu einer Umgebung des Systems - ausgebildet, um die beschriebene Funktion mit quasi atmendem Füllvolumen zu ermöglichen.

Es wird ein Ausführungsbeispiel des Systems bevorzugt, das sich dadurch auszeichnet, dass die Fluidverbindung zwischen dem Reservoir und dem Kreislauf frei von Stellelementen oder Durchtrittsveränderungselementen ist. Insbesondere ist die Fluidverbindung vorzugsweise frei von Ventilen. Es besteht somit eine dauerhafte, konstante Fluidverbindung zwischen dem Reservoir und dem Kreislauf. Die Fluidverbindung ist auf diese Weise besonders einfach und kostengünstig ausgestaltet. Die Ausgestaltung der Fluidverbindung ohne Stellelemente oder Durchtrittsveränderungselemente ist besonders günstig in Zusammenhang mit einer Volumenveränderungseinrichtung, wobei ohne Weiteres durch Veränderung des Füllvolumens Arbeitsmedium aus dem Kreislauf abgezogen oder in den Kreislauf abgegeben werden kann.

Insoweit zeigt sich, dass eine Medienmengenvariationseinrichtung, die ein Reservoir mit Volumenveränderungseinrichtung aufweist, ohne Pumpen oder Ventile auskommt, sodass sie sehr einfach und kostengünstig ausgestaltet ist. Es ist quasi lediglich ein Vorratsbehälter mit variablem Volumen vorgesehen, über den die Menge an Arbeitsmedium in dem Kreislauf variierbar ist.

Es wird auch ein Ausführungsbeispiel des Systems bevorzugt, das sich dadurch auszeichnet, dass die Volumenveränderungseinrichtung einen Kolben aufweist, der in einem das Füllvolumen umschließenden Zylinder verlagerbar aufgenommen ist. Auf diese Weise ist das Reservoir mit veränderlichem Füllvolumen technisch und konstruktiv sehr einfach realisierbar. Der Kolben ist dabei dicht an einer Zylinderinnenwandung geführt, sodass er in einer ersten Wirkrichtung das Füllvolumen verkleinern und damit Arbeitsmedium aus dem Zylinder in den Kreislauf verdrängen kann, wobei er in einer zweiten Wirkrichtung das Füllvolumen vergrößern und damit Arbeitsmedium aus dem Kreislauf in den Zylinder aufnehmen, quasi aufsaugen kann.

Das System weist bevorzugt eine Verlagerungseinrichtung auf, die mit dem Kolben wirkverbunden und ausgebildet ist, um den Kolben zu verlagern. Die Verlagerungseinrichtung kann dabei als Motor, bevorzugt als Elektromotor, insbesondere als Rotations- oder Linearmotor, ausgebildet sein, der in geeigneter Weise mit dem Kolben wirkverbunden ist.

Alternativ ist es möglich, dass das Reservoir als flexibles Reservoir, insbesondere als Reservoir mit flexibler Wandung, ausgebildet ist. Beispielsweise kann das Reservoir als flexibler Schlauch oder als Faltenbalg ausgebildet sein. Es ist dann beispielsweise möglich, das Füllvolumen in dem Reservoir durch Veränderung eines auf das Reservoir von außen einwirkenden Drucks zu verändern. Auch so kann eine einfach aufgebaute, kostengünstige und zugleich präzise arbeitende Medienmengenvariationseinrichtung bereitgestellt werden.

Ganz allgemein wird bevorzugt, dass das Reservoir ein geschlossenes Volumen mit flexibler Wandung aufweist, wobei das Füllvolumen durch Verlagerung oder Verformung der Wandung variierbar ist.

Es wird auch ein Ausführungsbeispiel des Systems bevorzugt, das sich durch eine Fördereinrichtung auszeichnet, die eingerichtet ist zur Förderung von Arbeitsmedium von dem Reservoir in den Kreislauf und/oder von dem Kreislauf in das Reservoir. Die Fördereinrichtung ist bevorzugt entlang der Fluidverbindung angeordnet. Die Fördereinrichtung ist bevorzugt eingerichtet zur Förderung von Arbeitsmedium von dem Reservoir in den Kreislauf in einer ersten Funktionsstellung, wobei sie in einer zweiten Funktionsstellung Arbeitsmedium von dem Kreislauf in das Reservoir fördert. Somit ist mithilfe der Fördereinrichtung bedarfsabhängig Arbeitsmedium aus dem Kreislauf entfernbar und in das Reservoir förderbar, wobei ebenfalls bedarfsabhängig mithilfe der Fördereinrichtung Arbeitsmedium von dem Reservoir in den Kreislauf förderbar ist, um dort die Füllmenge zu erhöhen. Die Fördereinrichtung ist vorzugsweise als Pumpe, insbesondere als reversierbare Pumpe, ausgebildet, mithin als Pumpe, die in zwei Wirkrichtungen - entsprechend den zuvor erläuterten beiden Funktionsstellungen - betrieben werden kann. Dabei ermöglicht die Anordnung einer Fördereinrichtung eine besonders exakte Zudosierung und/oder Entnahme von Arbeitsmedium in den Kreislauf oder aus dem Kreislauf, wodurch das Systemverhalten besonders genau regelbar ist.

Es wird auch ein Ausführungsbeispiel des Systems bevorzugt, das sich dadurch auszeichnet, dass in der Fluidverbindung ein Stellelement angeordnet ist, das eingerichtet ist zur Veränderung eines Durchtrittsquerschnitts der Fluidverbindung. In einer bevorzugten, einfachsten Ausgestaltung weist das Stellelement genau zwei Funktionsstellungen auf, nämlich eine erste, in welcher die Fluidverbindung gesperrt ist, und eine zweite, in welcher die Fluidverbindung freigegeben ist. Durch das Stellelement kann dann in Betriebszuständen des Systems, in denen keine Variation der Füllmenge des Arbeitsmediums in dem Kreislauf erfolgen soll, eine Trennung des Reservoirs von dem Kreislauf vorgenommen werden. Nur in den Betriebszuständen, in denen die Füllmenge des Arbeitsmediums in dem Kreislauf variiert werden soll, wird das Stellelement geöffnet. Bei diesem Ausführungsbeispiel kann das Stellelement sehr einfach und kostengünstig ausgebildet sein. Alternativ weist das Stellelement eine Mehrzahl von Funktionsstellungen zwischen den zuvor genannten Extremalpositionen auf, sodass der Durchtrittsquerschnitt diskret oder bevorzug kontinuierlich zwischen den Extremalpositionen variierbar ist. Hierdurch kann eine besonders feinfühlige Regelung der Zuführung oder Entnahme von Arbeitsmedium in den Kreislauf oder aus dem Kreislauf durchgeführt werden. Das Stellelement ist vorzugsweise als Ventil ausgebildet.

Es wird auch ein Ausführungsbeispiel des Systems bevorzugt, das sich dadurch auszeichnet, dass das Reservoir eine Druckausgleichsverbindung zu einer Umgebung des Systems aufweist. Es ist in diesem Fall nicht als geschlossener Behälter ausgebildet, sondern vielmehr als atmosphärischer Behälter. Dies hat den Vorteil, dass das Reservoir selbst nicht unter Druck steht, was die Sicherheit des Systems erhöht, wobei vereinfachte Anforderungen an die Ausgestaltung des Reservoirs bestehen.

Besonders bevorzugt wird ein System, welches eine Fördereinrichtung und ein Stellelement in der Fluidverbindung aufweist, wobei zugleich das Reservoir eine Druckausgleichsverbindung zur Umgebung des Systems aufweist. Dabei ermöglichen insbesondere die Fördereinrichtung und das Stellelement eine Ausgestaltung des Reservoirs als atmosphärischer Vorratsbehälter, da der Kreislauf über das Stellelement von der Umgebung getrennt werden kann, und wobei mittels der Fördereinrichtung eine Druckdifferenz zwischen dem Reservoir und dem Kreislauf überwindbar ist, sodass das in dem Reservoir druckentlastete Arbeitsmedium mittels der Fördereinrichtung in den unter Druck stehenden Kreislauf eingespeist werden kann.

Es wird auch ein Ausführungsbeispiel des Systems bevorzugt, das sich durch eine Steuereinrichtung auszeichnet, die ausgebildet ist zur Veränderung einer in dem Kreislauf vorhandenen Menge an Arbeitsmedium mittels der Medienmengenvariationseinrichtung in Abhängigkeit von wenigstens einem Betriebsparameter des Systems. Die Steuereinrichtung ist also zum einen ausgebildet und eingerichtet zur Erfassung von wenigstens einem Betriebsparameter des Systems. Vorzugsweise ist sie mit wenigstens einem Sensor zur Erfassung eines Betriebsparameters des Systems wirkverbunden. Weiterhin ist die Steuereinrichtung mit der Medienmengenveränderungseinrichtung wirkverbunden, um die in dem Kreislauf vorhandene Menge an Arbeitsmedium mithilfe der Medienmengenveränderungseinrichtung zu verändern. Dies ist vorteilhaft, da sich gezeigt hat, dass eine insbesondere in Hinblick auf die Leistungsausbeute des Systems optimale Füllmenge des Kreislaufs je nach Betriebspunkt des Systems variiert. Das System kann daher optimal und insbesondere mit optimaler Leistungsausbeute und zugleich stabil betrieben werden, wenn die Füllmenge durch die Steuereinrichtung mithilfe der Medienmengenvariationseinrichtung betriebspunktabhängig variiert wird. Es ist dann in keinem Betriebspunkt des Systems eine zu große Füllmenge in dem Kreislauf enthalten, sodass keine Leistungseinbußen hinzunehmen sind. Zugleich kann sichergestellt werden, dass in jedem Betriebspunkt eine hinreichend große Füllmenge in dem Kreislauf vorhanden ist, um einen stabilen Betrieb zu gewährleisten.

Die Steuereinrichtung ist bei einem bevorzugten Ausführungsbeispiel ausgebildet zur Regelung der Menge an Arbeitsmedium in dem Kreislauf in Abhängigkeit von wenigstens einem Betriebsparameter des Systems. Hierdurch ist eine sehr genaue betriebspunktabhängige Einstellung der Füllmenge möglich.

Als Betriebsparameter können bevorzugt eine von dem System abgegebene Leistung, eine Wärmezufuhr in das System, eine Überhitzung des Arbeitsmediums in dem System, ein Nassdampfgehalt des Arbeitsmediums in dem Kreislauf, eine Drehzahl einer Expansionseinrichtung des Systems, ein Druck stromaufwärts der Expansionseinrichtung in dem Kreislauf, und/oder ein Temperatur und/oder ein Druck in dem Kondensator verwendet werden.

Bei einem bevorzugten Ausführungsbeispiel des Systems ist ein Kavitationssensor im Bereich einer Fördereinrichtung des Kreislaufs angeordnet, wobei die Steuereinrichtung ausgebildet ist zur Veränderung der in dem Kreislauf vorhandenen Menge an Arbeitsmedium mittels der Medienmengenvariationseinrichtung in Abhängigkeit von einem Signal des Kavitationssensors. In diesem Fall wird das Signal des Kavitationssensors als Betriebsparameter des Systems herangezogen. Die Fördereinrichtung des Kreislaufs ist ausgebildet zur Förderung des Arbeitsmediums entlang des Systemkreislaufs, wobei sie bevorzugt als Speisepumpe ausgebildet ist. Der Kavitationssensor ist so ausgebildet und angeordnet, dass bevorzugt eine beginnende Kavitation, oder aber Betriebsbedingungen, unter denen eine beginnende Kavitation zu erwarten ist, im Bereich der Fördereinrichtung detektiert werden kann/können. Ist dies der Fall, wird die Füllmenge in dem Kreislauf durch die Steuereinrichtung mittels der Medienmengenvariationseinrichtung erhöht, um Kavitationen zu unterdrücken oder zu verhindern. Auf diese Weise ist es möglich, das System stabil zu betreiben und die Fördereinrichtung des Kreislaufs vor einer Beschädigung durch Kavitation zu bewahren.

Es wird auch ein Ausführungsbeispiel des Systems bevorzugt, welches eingerichtet ist für einen organischen Rankine-Kreisprozess - kurz ORC-Prozess. Das System weist bevorzugt - entlang des Kreislaufs in Strömungsrichtung des Arbeitsmediums gesehen - einen Verdampfer, eine Expansionseinrichtung, einen Kondensator und die Fördereinrichtung auf. Das Arbeitsmedium nimmt in dem Verdampfer Wärme auf, wodurch es verdampft wird. In der Expansionseinrichtung wird das Arbeitsmedium entspannt, wobei es mechanische Arbeit leistet. In dem Kondensator wird das Arbeitsmedium gekühlt und vorzugsweise kondensiert, woraufhin es wiederum der Fördereinrichtung zugeführt wird, sodass der Kreislauf geschlossen ist. Der ORC-Prozess eignet sich in besonderer Weise zur Nutzung von Wärme bei einem niedrigerem Temperaturniveau, als dies beim klassischen Clausius-Rankine-Kreisprozess verwendet wird, somit insbesondere zur stationären Wärmenutzung, beispielsweise in Geothermiekraftwerken, oder zur Abwärmenutzung von industriellen Prozessen oder von Brennkraftmaschinen, und zwar sowohl im stationären als auch im mobilen Bereich. Als Expansionseinrichtung ist bevorzugt eine volumetrisch arbeitende Expansionseinrichtung vorgesehen, beispielsweise eine Hubkolbenmaschine, ein Scroll-Expander, eine Flügelzellenmaschine oder ein Roots-Expander, wobei besonders bevorzugt ein Schraubenexpander vorgesehen ist. Dieser eignet sich in besonderer Weise für einen ORC-Prozess. Auch eine Strömungsmaschine, insbesondere eine Turbine, ist als Expansionseinrichtung möglich. Die Expansionseinrichtung ist bevorzugt mit einem Generator wirkverbunden, sodass die in der Expansionseinrichtung gewandelte mechanische Energie mittels des Generators in elektrische Energie umgewandelt werden kann. Die Fördereinrichtung ist vorzugsweise als Speisepumpe ausgebildet.

Das System weist bevorzugt Ethanol als Arbeitsmedium auf. Dieses ist insbesondere in einem ORC-Prozess, der ausgelegt ist zur Abwärmenutzung von Brennkraftmaschinen besonders geeignet.

Bevorzugt ist das System eingerichtet für eine mobile Anwendung, insbesondere als mobiles ORC-System. Dabei wird es bevorzugt zur Nutzung der Abwärme einer Brennkraftmaschine eingesetzt, welche dem Antrieb eines Kraftfahrzeugs dient.

Die Aufgabe wird auch gelöst, indem eine Steuereinrichtung für ein System für einen thermodynamischen Kreisprozess, bevorzugt für einen organischen Rankine-Kreisprozess, mit den Merkmalen des Anspruchs 12 geschaffen wird. Die Steuereinrichtung ist ausgebildet zur Veränderung einer in einem Kreislauf des Systems vorhandenen Menge an Arbeitsmedium durch Ansteuerung einer Medienmengenveränderungseinrichtung in Abhängigkeit von wenigstens einem Betriebsparameter des Systems. Bevorzugt ist die Steuereinrichtung eingerichtet zum Betreiben eines Systems nach einem der zuvor beschriebenen Ausführungsbeispiele. Somit verwirklichen sich in Zusammenhang mit der Steuereinrichtung die Vorteile, die bereits in Zusammenhang mit dem System erläutert wurden.

Die Steuereinrichtung weist vorzugsweise eine Schnittstelle zu wenigstens einem Sensor auf, durch welchen ein Betriebsparameter des Systems erfassbar ist. Vorzugsweise weist die Steuereinrichtung eine Schnittstelle zu einem Kavitationssensor des Systems auf. Alternativ oder zusätzlich weist die Steuereinrichtung bevorzugt eine Schnittstelle zu einer Medienmengenveränderungseinrichtung des Systems auf, um diese in geeigneter Weise zur Veränderung der in dem Kreislauf vorhandenen Menge an Arbeitsmedium - insbesondere in Abhängigkeit von dem wenigstens einem Betriebsparameter - anzusteuern.

Die Aufgabe wird auch gelöst, indem ein Verfahren zum Betreiben eines Systems für einen thermodynamischen Kreisprozess, besonders bevorzugt zum Betreiben eines Systems für einen organischen Rankine-Kreisprozess, mit den Merkmalen des Anspruchs 13 geschaffen wird. Das Verfahren dient bevorzugt zum Betreiben eines Systems nach einem der zuvor beschriebenen Ausführungsbeispiele. Es zeichnet sich dadurch aus, dass eine in einem Kreislauf des Systems vorhandene Menge an Arbeitsmedium mittels einer Medienmengenveränderungseinrichtung während eines Betriebs des Systems in Abhängigkeit von wenigstens einem Betriebsparameter des Systems verändert wird. Dadurch verwirklichen sich in Zusammenhang mit dem Verfahren die Vorteile, die bereits in Zusammenhang mit dem System und der Steuereinrichtung erläutert wurden.

In diesem Zusammenhang zeigt sich auch, dass die Steuereinrichtung bevorzugt eingerichtet ist zur Ausführung eines Verfahrens zum Betreiben eines Systems für einen thermodynamischen Kreisprozess, insbesondere einen organischen Rankine-Kreisprozess, gemäß der zuvor beschriebenen Ausfiihrungsform. Dabei ist es möglich, dass das Verfahren in eine elektronische Struktur, insbesondere eine Hardware-Struktur, der Steuereinrichtung implementiert ist. Alternativ ist es möglich, dass ein Computerprogrammprodukt in die Steuereinrichtung geladen ist, welches Anweisungen aufweist, aufgrund derer das Verfahren durchgeführt wird, wenn das Computerprogrammprodukt auf der Steuereinrichtung läuft.

Schließlich wird die Aufgabe gelöst, indem eine Anordnung mit den Merkmalen des Anspruchs 14 geschaffen wird. Diese weist eine Brennkraftmaschine und ein System nach einem der zuvor beschriebenen Ausführungsbeispiele auf. Dabei sind die Brennkraftmaschine und das System derart miteinander wirkverbunden, dass Abwärme der Brennkraftmaschine in dem System nutzbar ist. Das System ist insoweit bevorzugt eingerichtet für einen organischen Rankine-Kreisprozess. Es verwirklichen sich in Zusammenhang mit der Anordnung die Vorteile, die bereits in Zusammenhang mit dem System, der Steuereinrichtung und dem Verfahren erläutert wurden.

Vorzugsweise ist dem System Abwärme zuführbar, welche von Abgas der Brennkraftmaschine umfasst ist. Alternativ oder zusätzlich ist es möglich, dass dem System Abwärme zuführbar ist, welche von einem Kühlmittel der Brennkraftmaschine umfasst ist.

Es ist möglich, dass ein Teil der Abwärme in dem System in mechanische Energie gewandelt wird, welche unmittelbar der Brennkraftmaschine wieder zugeführt wird, beispielsweise indem sie einer Kurbelwelle der Brennkraftmaschine zugeleitet wird. Alternativ ist es möglich, dass die in dem System gewandelte mechanische Arbeit in elektrische Energie umgewandelt wird, wobei es möglich ist, dass diese - vorzugsweise über einen Elektromotor - wiederum der Brennkraftmaschine zur Unterstützung zugeführt wird, beispielsweise indem der Elektromotor auf die Kurbelwelle der Brennkraftmaschine wirkt. Alternativ oder zusätzlich ist es möglich, dass die in dem System erzeugte elektrische Energie einem externen Verbraucher oder einem Stromnetz, vorzugsweise einem Bordnetz eines Kraftfahrzeugs, welches die Brennkraftmaschine aufweist, zugeführt wird.

Es ist möglich, dass die Brennkraftmaschine der Anordnung dem Antrieb eines Kraftfahrzeugs dient. Besonders bevorzugt ist die Anordnung in einem Wasserfahrzeug, insbesondere in einem Schiff, bevorzugt in einem Fährschiff, vorgesehen, wobei die Brennkraftmaschine dem Antrieb des Wasserfahrzeugs, insbesondere des Schiffs, bevorzugt der Fähre, dient. In dem System gewandelte elektrische Energie wird dabei bevorzugt einem Bordstromnetz des Wasserfahrzeugs zugeführt. Auch andere mobile Anwendungen der Anordnung sind möglich. Weiterhin ist es möglich, dass die Anordnung in stationären Anwendungen verwendet wird, beispielsweise zur Abwärmenutzung beim Betrieb stationärer Pumpen.

Die Brennkraftmaschine der Anordnung ist vorzugsweise als Hubkolbenmotor ausgebildet. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Beschreibung des Systems, der Steuereinrichtung und der Anordnung einerseits und des Verfahrens andererseits sind komplementär zueinander zu verstehen. Verfahrensschritte, die explizit oder implizit in Zusammenhang mit dem System, der Steuereinrichtung oder der Anordnung beschrieben wurden, sind bevorzugt einzeln oder miteinander kombiniert Verfahrensschritte einer bevorzugten Ausführungsform des Verfahrens. Merkmale des Systems, der Steuereinrichtung oder der Anordnung, die in Zusammenhang mit dem Verfahren explizit oder implizit beschrieben wurden, sind bevorzugt einzeln oder miteinander kombiniert Merkmale eines bevorzugten Ausführungsbeispiels des Systems, der Steuereinrichtung oder der Anordnung. Das Verfahren zeichnet sich bevorzugt durch wenigstens einen Verfahrensschritt aus, der durch wenigstens ein Merkmal des Systems, der Steuereinrichtung oder der Anordnung bedingt ist. Das System, die Steuereinrichtung oder die Anordnung zeichnen sich bevorzugt durch wenigstens ein Merkmal aus, das durch wenigstens ein Verfahrensschritt des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels einer Anordnung mit einer Brennkraftmaschine und einem ersten Ausführungsbeispiel des Systems, und
- Figur 2: eine schematische Darstellung eines zweiten Ausführungsbeispiel einer Anordnung mit einer Brennkraftmaschine und einem zweiten Ausführungsbeispiel des Systems.

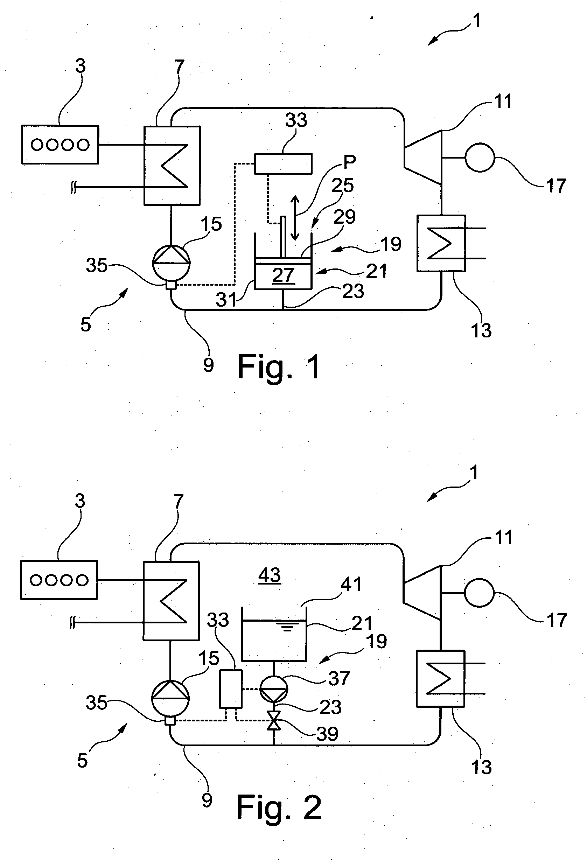

Fig. 1 zeigt ein erstes Ausführungsbeispiel einer Anordnung 1 mit einer Brennkraftmaschine 3 und einem ersten Ausführungsbeispiel eines Systems 5 zum Betreiben eines thermodynamischen Kreisprozesses, hier insbesondere eines organischen Rankine-Kreisprozesses. Dabei sind das System 5 und die Brennkraftmaschine 3 miteinander zur Nutzung von Abwärme der Brennkraftmaschine 3 wirkverbunden. Hierbei ist dem System 5 von dem Abgas der Brennkraftmaschine 3 und/oder von dem Kühlmittel der Brennkraftmaschine 3 umfasste Abwärme zuführbar. Eine Abgasleitung und/oder eine Kühlmittelleitung der Brennkraftmaschine 3 steht/stehen hierfür mit einem Verdampfer 7 in thermischer Verbindung, um einem in einem Kreislauf 9 umlaufenden Arbeitsmedium des Systems 5 in dem Verdampfer 7 Abwärme der Brennkraftmaschine 3 zuzuführen.

Das System 5 weist entlang des Kreislaufs 9 - in Strömungsrichtung des Arbeitsmediums gesehen - den Verdampfer 7 auf, in dem das Arbeitsmedium, vorzugsweise Ethanol, verdampft wird, eine vorzugsweise als Schraubenexpander ausgebildete Expansionseinrichtung 11, in welcher das Arbeitsmedium expandiert wird, wobei es mechanische Arbeit leistet, einen Kondensator 13, in dem das Arbeitsmedium gekühlt und vorzugsweise wieder kondensiert wird, und schließlich eine Fördereinrichtung 15, die vorzugsweise als Speisepumpe ausgebildet, und die dazu dient, das Arbeitsmedium entlang des Kreislaufs 9 zu fördern.

Die Expansionseinrichtung 11 ist bevorzugt mit einem Generator 17 wirkverbunden, sodass die in der Expansionseinrichtung 11 gewandelte mechanische Arbeit durch den Generator 17 in elektrische Energie wandelbar ist. Somit wird insgesamt ein Teil der in dem Verdampfer 7 aufgenommenen Abwärme in der Expansionseinrichtung 11 in mechanische Arbeit umgewandelt, die dann wiederum von dem Generator 17 in elektrische Energie gewandelt wird. Diese kann zur Unterstützung der Brennkraftmaschine 3 oder zur externen Nutzung, insbesondere in einem Stromnetz, beispielsweise in einem Bordstromnetz eines von der Brennkraftmaschine 3 angetriebenen Kraftfahrzeugs, verwendet werden.

Ein Kreislauf 9 eines solchen Systems 5 weist typischerweise eine einmalig festgelegte Füllmenge an Arbeitsmedium auf. Diese bestimmt wesentlich das Druckniveau in dem Kondensator 13 und damit die Leistungsausbeute des Kreisprozesses. Dabei muss die Füllmenge für eine leistungsoptimalen Betrieb so gering wie möglich sein, wobei sie jedoch nach unten durch die Stabilität der Prozessführung begrenzt ist, beispielsweise weil Kavitationen in der Fördereinrichtung 15 auftreten können, wenn zu wenig Arbeitsmedium in dem Kreislauf 9 vorhanden ist, beziehungsweise wenn das Druckniveau in dem Kondensator 13 zu niedrig ist. Darüber hinaus kann die optimale Füllmenge je nach Betriebspunkt des Systems 5 variieren. Typischerweise wird daher eine größere Füllmenge unter Berücksichtigung einer Sicherheitsreserve in dem Kreislauf 9 vorgesehen, um in jedem Betriebspunkt einen stabilen Betrieb zu gewährleisten. Dabei werden Einbußen in der Leistungsausbeute in Kauf genommen.

Um dieses Problem zu vermeiden, weist das System 5 hier eine Medienmengenvariationseinrichtung 19 auf, die mit dem Kreislauf 9 derart verbunden und so ausgebildet ist, dass eine in dem Kreislauf 9 vorhandene Menge an Arbeitsmedium mittels der Medienmengenvariationseinrichtung 19 im Betrieb des Systems 5 veränderbar ist. Hierzu weist die Medienmengenvariationseinrichtung 19 ein Reservoir 21 auf, welches mit dem Kreislauf 9 über eine Fluidverbindung 23 verbunden ist.

Das Reservoir 21 weist eine Volumenveränderungseinrichtung 25 auf, die eingerichtet ist zur Veränderung eines Füllvolumens 27 für das Arbeitsmedium in dem Reservoir 21, mithin eines dem Arbeitsmedium in dem Reservoir zur Verfügung stehenden Volumens. Zugleich ist die Fluidverbindung 23 frei von Stellelementen oder Durchtrittsveränderungselementen, wobei sie insbesondere kein Ventil aufweist.

Bei dem hier dargestellten Ausführungsbeispiel weist die Volumenveränderungseinrichtung 25 einen Kolben 29 auf, der in einem das Füllvolumen 27 umschließenden Zylinder 31 verlagerbar aufgenommen ist.

Insgesamt ist das Reservoir 21 hier demnach als geschlossener Vorratsbehälter mit variablem Volumen ausgebildet, wobei weder eine Pumpe noch ein Ventil notwendig sind, um Arbeitsmedium aus dem Reservoir 21 in den Kreislauf 9 zu dosieren, oder aus dem Kreislauf 9 zu entnehmen und dem Reservoir 21 zuzuführen. Hierzu ist der Kolben 29 entlang eines Doppelpfeils P in dem Zylinder 31 verlagerbar, wodurch es möglich ist, das Füllvolumen 27 zu vergrößern oder zu verkleinern, und so Arbeitsmedium aus dem Reservoir 21 in den Kreislauf 9 zu verdrängen, oder aber Arbeitsmedium aus dem Kreislauf 9 in das Reservoir 21 aufzunehmen.

Auf diese Weise kann durch geeignete Ansteuerung der Bewegung des Kolbens 29 die Füllmenge an Arbeitsmedium in dem Kreislauf 9 jederzeit im Betrieb des Systems 5 variiert werden.

Das System 5 weist eine Steuereinrichtung 33 auf, die mit dem Kolben 29 zu dessen Betätigung wirkverbunden ist. Die Steuereinrichtung 33 ist außerdem hier mit einem Kavitationssensor 35 wirkverbunden, wobei sie ausgebildet ist zur Verlagerung des Kolbens 29 und damit zur Veränderung der in dem Kreislauf 9 vorhandenen Menge an Arbeitsmedium in Abhängigkeit von einem Signal des Kavitationssensors 35.

Das in Figur 1 dargestellte Ausführungsbeispiel ist besonders einfach aufgebaut, da die Medienmengenvariationseinrichtung 19 keine Pumpe und kein Ventil benötigt.

Fig. 2 zeigt eine schematische Darstellung eines zweiten Ausführungsbeispiels einer Anordnung 1 mit der Brennkraftmaschine 3 und einem zweiten Ausführungsbeispiel des Systems 5. Gleiche und funktionsgleiche Elemente sind mit gleichen Bezugszeichen versehen, sodass insofern auf die vorangegangene Beschreibung verwiesen wird. Bei dem hier dargestellten Ausführungsbeispiel weist die Medienmengenvariationseinrichtung 19 eine Fördereinrichtung 37 auf, die hier als Pumpe ausgebildet ist, und die eingerichtet ist zur Förderung von Arbeitsmedium aus dem Reservoir 21 in den Kreislauf 9 in einer ersten Funktionsstellung, wobei sie eingerichtet ist zur Förderung von Arbeitsmedium aus dem Kreislauf 9 in das Reservoir 21 in einer zweiten Funktionsstellung. Die Fördereinrichtung 37 ist demnach bevorzugt als reversierbare Pumpe ausgebildet, deren Wirkrichtung bedarfsabhängig veränderbar ist. Die Fördereinrichtung 37 ist hier entlang der Fluidverbindung 23 beziehungsweise in der Fluidverbindung 23 angeordnet.

Weiterhin ist in der Fluidverbindung 23 ein Stellelement 39 angeordnet, das eingerichtet ist zur Veränderung eines Durchtrittsquerschnitts der Fluidverbindung 23. Das Stellelement 39 ist vorzugsweise als Ventil ausgebildet, wobei es möglich ist, dass es in einer ersten Funktionsstellung vollständig geöffnet und in einer zweiten Funktionsstellung vollständig geschlossen ist. Vorzugsweise weist das Stellelement 39 zwischen diesen Extremalpositionen weitere diskrete oder bevorzugt kontinuierliche Funktionsstellungen auf.

Mittels der Fördereinrichtung 37 ist demnach bei geöffnetem Stellelement 39 Arbeitsmedium entweder aus dem Reservoir 21 in den Kreislauf 9 förderbar, oder aber aus dem Kreislauf 9 entnehmbar und in das Reservoir 21 förderbar. Dabei kann eine besonders feinfühlige Zudosierung oder Entnahme von Arbeitsmedium durch geeignete Ansteuerung der Fördereinrichtung 37 und/oder des Stellelements 39 erfolgen. Die Anordnung der Fördereinrichtung 37 und des Stellelements 39 in der Fluidverbindung 23 ermöglichen die Ausbildung des Reservoirs 21 als atmosphärischen Vorratsbehälter, wobei das Reservoir 21 eine Druckausgleichsverbindung 41 zu einer Umgebung 43 des Systems 5 aufweist. Das Reservoir 21 ist also bevorzugt drucklos, wobei der Kreislauf 9 insbesondere durch Schließen des Stellelements 39 von der Umgebung 43 isoliert werden kann, sodass der Druck in dem Kreislauf 9 höher, insbesondere viel höher sein kann als der Druck in der Umgebung 43. Die Fördereinrichtung 37 ermöglicht die Förderung von Arbeitsmedium entgegen eines Druckgradienten aus dem Reservoir 21 in den Kreislauf 9. Das drucklose Reservoir 21 kann entsprechend einfach ausgebildet sein, weil es keinem hohen Innendruck standhalten muss. Zudem erhöht die Verwendung eines drucklosen Reservoirs 21 die Sicherheit des Systems 5.

Die Steuerungseinrichtung 33 ist hier wiederum bevorzugt mit dem Kavitationssensor 35 wirkverbunden, außerdem mit der Fördereinrichtung 37 und bevorzugt auch mit dem Stellelement 39, um die Menge an Arbeitsmedium in dem Kreislauf 9 in Abhängigkeit von dem Signal des Kavitationssensors 35 verändern, vorzugsweise regeln zu können.

Insgesamt zeigt sich, dass bei dem hier vorgeschlagenen System 5 mithilfe der Steuereinrichtung 33 und dem Verfahren das Druckniveau in dem Kondensator 13 durch Variation der Füllmenge an Arbeitsmedium in dem Kreislauf 9 eingestellt werden kann, wodurch ein in jedem Betriebspunkt leistungsoptimaler und stabiler Betrieb des Systems 5 möglich ist. Das hier vorgeschlagene System 5 ist gemäß beiden Ausführungsbeispielen kompakt und wartungsfrei aufgebaut, wobei es einen einfachen Aufbau mit wenigen beweglichen Teilen aufweist. Es ist besonders geeignet zur Ausschöpfung des Leistungspotentials mobiler und dynamisch betriebener Systeme zur Durchführung von ORC-Prozessen. Das Regelverhalten des Systems 5 ist insbesondere bei Lastwechseln und auch bei An- und Abfahrprozessen verbessert.

## Patentansprüche

1. System (5) für einen thermodynamischen Kreisprozess, mit einem Kreislauf (9) für ein Arbeitsmedium, **gekennzeichnet durch** eine Medienmengenvariationseinrichtung (19), die mit dem Kreislauf (9) derart verbunden und so ausgebildet ist, dass eine in dem Kreislauf (9) vorhandene Menge an Arbeitsmedium mittels der Medienmengenvariationseinrichtung (19) im Betrieb des Systems (5) veränderbar ist.

2. System (5) nach Anspruch 1, **dadurch gekennzeichnet, dass** die Medienmengenvariationseinrichtung (19) ein Reservoir (21) für das Arbeitsmedium aufweist, welches mit dem Kreislauf (9) in Fluidverbindung ist.

3. Systems (5) nach einem der vorhergehenden Ansprüche, **dadurch gekennzeichnet, dass** das Reservoir (21) eine Volumenveränderungseinrichtung (25) aufweist, die eingerichtet ist zur Veränderung eines Füllvolumens (27) für das Arbeitsmedium in dem Reservoir (21).

4. System (5) nach einem der vorhergehenden Ansprüche, **dadurch gekennzeichnet, dass** die Fluidverbindung (23) frei von Stellelementen oder Durchtrittsveränderungselementen ist.

5. System (5) nach einem der vorhergehenden Ansprüche, **dadurch gekennzeichnet, dass** die Volumenveränderungseinrichtung (25) einen Kolben (29) aufweist, der in einem das Füllvolumen (27) umschließenden Zylinder (31) verlagerbar aufgenommen ist.

6. System (5) nach einem der vorhergehenden Ansprüche, **gekennzeichnet durch** eine Fördereinrichtung (37), die eingerichtet ist zur Förderung von Arbeitsmedium von dem Reservoir (21) in den Kreislauf (9) und/oder von dem Kreislauf (9) in das Reservoir (21), wobei die Fördereinrichtung (37) vorzugsweise entlang der Fluidverbindung (23) angeordnet ist.

7. System (5) nach einem der vorhergehenden Ansprüche, **dadurch gekennzeichnet, dass** in der Fluidverbindung (23) ein Stellelement (39) angeordnet ist, wobei das Stellelement (39) eingerichtet ist zur Veränderung eines Durchtrittsquerschnitts der Fluidverbindung (23).

8. System (5) nach einem der vorhergehenden Ansprüche, **dadurch gekennzeichnet, dass** das Reservoir (21) eine Druckausgleichsverbindung (41) zu einer Umgebung (43) des Systems (5) aufweist.

9. System (5) nach einem der vorhergehenden Ansprüche, **gekennzeichnet durch** eine Steuereinrichtung (33), die ausgebildet ist zur Veränderung einer in dem Kreislauf (9) vorhandenen Menge an Arbeitsmedium mittels der Medienmengenvariationseinrichtung (19) in Abhängigkeit von wenigstens einem Betriebsparameter des Systems (5).

10. System (5) nach einem der vorhergehenden Ansprüche, **dadurch gekennzeichnet, dass** ein Kavitationssensor (35) im Bereich einer Fördereinrichtung (15) des Kreislaufs (9) angeordnet ist, wobei die Steuereinrichtung (33) ausgebildet ist zur Veränderung einer in dem Kreislauf (9) vorhandenen Menge an Arbeitsmedium mittels der Medienmengenvariationseinrichtung (19) in Abhängigkeit von einem Signal des Kavitationssensors (35).

11. System (5) nach einem der vorhergehenden Ansprüche, **dadurch gekennzeichnet, dass** das System (5) eingerichtet ist für einen organischen Rankine-Kreisprozess.

12. Steuereinrichtung (33) für ein System (5) für einen thermodynamischen Kreisprozess, insbesondere für ein System nach einem der Ansprüche 1 bis 11, **dadurch gekennzeichnet, dass** die Steuereinrichtung (33) ausgebildet ist zur Veränderung einer in einem Kreislauf (9) des Systems (5) vorhandenen Menge an Arbeitsmedium mittels einer Medienmengenvariationseinrichtung (19) in Abhängigkeit von wenigstens einem Betriebsparameter des Systems (5).

13. Verfahren zum Betreiben eines Systems (5) für einen organischen Kreisprozess, insbesondere zum Betreiben eines Systems nach einem der Ansprüche 1 bis 11, **dadurch gekennzeichnet, dass** eine in einem Kreislauf (9) des Systems (5) vorhandene Menge an Arbeitsmedium mittels einer Medienmengenvariationseinrichtung (19) während eines Betriebs des Systems (5) in Abhängigkeit von wenigstens einem Betriebsparameter des Systems (5) verändert wird.

14. Anordnung (1), mit einer Brennkraftmaschine (3) und einem System (5) nach einem der Ansprüche 1 bis 11, wobei das System (5) mit der Brennkraftmaschine (3) derart wirkverbunden ist, dass Abwärme der Brennkraftmaschine (3) in dem System (5) nutzbar ist.
